# EUROPEAN PATENT APPLICATION

(11) **EP 4 325 458 A1**
(43) Date of publication of application: **21.02.2024**
(21) Application number: 22788425.1
(22) Date of filing: 13.04.2022
(51) Int. Cl.: G07F 17/40, G06Q 30/06, A47B 81/00, H04W 4/60, H04M 1/02, H04W 4/02, G01S 19/14, G01P 15/00, G01G 11/00, G06K 19/06

(54) **SYSTEM FOR RECEIVING AND STORING ELECTRONIC DEVICE, AND METHOD FOR RECEIVING AND STORING ELECTRONIC DEVICE AT TIME OF TRADING**

(30) Priority: 14.04.2021 KR 20210048456; 20.01.2022 KR 20220008641
(71) Applicant: Mintit Co., Ltd., Gyeonggi-do 10117 (KR)
(72) Inventor: JI, Chang Hwan, Seoul 06262 (KR); YOO, Do Hyung, Seoul 06216 (KR)
(74) Representative: Gill Jennings & Every LLP
(86) International application number: PCT/KR2022/005329
(87) International publication number: WO 2022/220569

(57) **Abstract**

Disclosed are a system for receiving and storing an electronic device, and a method for receiving and storing an electronic device at the time of trading. According to an embodiment of the present invention, a system for receiving and storing an electronic device may include a reception storage box in which an electronic device inserted through an inlet port is moved at a predetermined angle to allow the electronic device to be received and stored.

## Description

### Technical Field

The present disclosure relates to a system for receiving and storing an electronic device that may stably receive and store a purchased electronic device and to a method of receiving and storing an electronic device at the time of trading.

### Background Art

Depending on the type of purchase (transaction) of an electronic device, there are various methods available for receiving and storing the electronic device.

In order to receive and store the electronic device, a method of checking the receiving and storing states of a purchased electronic device in real time may be required, in addition to reliable and stable receiving and storing functions.

When receiving and storing an electronic device, how to check the required shape and structure of a storage box and the storage state of the purchased electronic device may be important.

In particular, when the electronic device is received and stored in an unmanned purchase apparatus, damage may occur on the buyer's side when the purchased electronic device and the stored electronic device are different, which may affect a future sales plan.

Accordingly, a process of checking whether an electronic device received in the unmanned purchase apparatus is a purchased electronic device needs to be performed in real time.

In a sale (sale and purchase) of an electronic device, there are various receiving and storing methods for the electronic device depending on the type of buyer, but it may be difficult to find a receiving and storing method that is actually required.

Therefore, there is an urgent need for a method that allows reliable and stable real-time check of the most optimal receiving and storing method for an electronic device immediately after purchase.

### Disclosure of the Invention

### Technical Goals

An aspect of an embodiment of the present disclosure is to provide a system for receiving and storing an electronic device that guides a method of receiving and storing a purchased electronic device in real time, and provide a method of receiving and storing an electronic device at the time of trading.

In addition, an aspect of an embodiment of the present disclosure is to check in real time whether the purchased electronic device is accurately stored according to a plan, to reduce damage and an adverse effect on a sales plan that may occur when the purchased electronic device and the stored electronic device are different.

### Technical Solutions

A system for receiving and storing an electronic device according to an embodiment of the present disclosure may include a reception storage box in which an electronic device inserted through an inlet port is moved at a predetermined angle to allow the electronic device to be received and stored.

In addition, regarding a method of receiving and storing an electronic device at the time of trading, the method being implemented in a system for receiving and storing an electronic device, the method of receiving and storing an electronic device according to the present embodiment may be configured to include receiving and storing, by a storage box of the system for receiving and storing an electronic device, an electronic device inserted through an inlet by moving the electronic device at a determined slope.

### Effects

According to an embodiment of the present disclosure, a system for receiving and storing an electronic device that guides a method of receiving and storing a purchased electronic device in real time, and a method of receiving and storing an electronic device at the time of trading may be provided.

In addition, according to the present disclosure, it may be possible to reduce damage and an adverse effect on a sales plan that may occur when the purchased electronic device and the stored electronic device are different, by checking in real time whether the purchased electronic device is stored accurately according to the plan.

### Brief Description of Drawings

FIG. 1 is a block diagram illustrating a configuration of a system for receiving and storing an electronic device according to an embodiment of the present disclosure.
FIG. 2 is a diagram illustrating an example of a configuration of a system for receiving and storing an electronic device according to the present disclosure.
FIG. 3 is a functional block diagram of when an electronic device is received and retrieved after being stored.
FIG. 4 is a diagram for describing a storage box according to a method of receiving an electronic device of the present disclosure.
FIG. 5 is a diagram for describing an example of dimensions of a storage box according to the present disclosure.
FIG. 6 is a diagram for illustrating a form of impact of when an electronic device is inserted, for each type of storage box.
FIG. 7 is a diagram for describing a sliding structure of a storage box according to the present disclosure.
FIG. 8 is an example diagram of a structure of a door/non-door type of a storage box with a slot-type structure.
FIG. 9 is a diagram for illustrating a receiving operation and a lock form when inserting an electronic device through a slide of a slot-type receiving structure.
FIG. 10 is a diagram illustrating an example of a structural design of an inspection box and a storage box.
FIG. 11 is a more detailed diagram of the structural design of FIG. 10.
FIG. 12 is a flowchart illustrating a method of receiving and storing an electronic device at the time of trading, according to an embodiment of the present disclosure.

### Best Mode for Carrying Out the Invention

Hereinafter, embodiments are described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular examples only and is not intended to be limiting. The singular forms "a," "an," and "the" are intended to include the plural forms as well, unless the context clearly indicates otherwise. It should be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical or scientific terms used herein have the same meaning as those commonly understood by one of ordinary skill in the art to which the embodiments belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

When describing the embodiments with reference to the accompanying drawings, like reference numerals refer to like components and a repeated description related thereto is omitted. In the description of embodiments, detailed description of well-known related structures or functions is omitted when it is deemed that such description may cause ambiguous interpretation of the present disclosure.

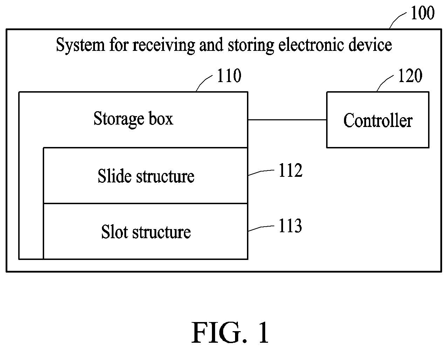

FIG. 1 is a block diagram illustrating a configuration of a system for receiving and storing an electronic device according to an embodiment of the present disclosure.

Referring to FIG. 1, a system 100 for receiving and storing an electronic device according to an embodiment of the present disclosure may be configured to include a storage box 110 and a controller 120. In addition, the storage box 110 may include a slide structure 112 and a slot structure 113.

First, the storage box 110 may receive and store an electronic device inserted through an inlet by moving the electronic device at a determined slope. That is, when a purchased electronic device is inserted through the inlet, the storage box 110 may move the electronic device to a specific internal storage space and stably store the electronic device.

Here, the electronic device may be an electronic product such as a cellular phone, a mobile phone, and the like purchased for second-hand use from a user, who is a customer.

The controller 120 may generate state information related to the storage box by controlling the electronic device. That is, the controller 120 may generate state information according to a change occurring in the storage box 110 associated with insertion of the electronic device into the storage box 110.

In generating state information, the controller 120 may generate position information, internal photographing information, and movement/posture information as the state information.

The controller 120 may generate position information to be included in the state information by operating and controlling a dedicated application installed on the electronic device. The position information may be associated with a current position of the electronic device in the storage box. That is, the controller 120 may operate and control the application and generate information on a position of an inserted electronic device in the storage box 110 through identifying the position by the application, and may thus generate state information on whether the electronic device is received and stored in a defined position.

In addition, the controller 120 may generate internal photographing information to be included in the state information by operating and controlling a camera mounted on the electronic device. The internal photographing information may be associated with an inside of the storage box 110. That is, the controller 120 may operate and control a built-in camera and generate a state of the inside of the storage box 110 as information through internal photographing by the controlled camera, and may thus generate state information that allows the current situation of the inside of the storage box 110 to receive and store an electronic device to be known.

In addition, the controller 120 may generate movement/posture information to be included in the state information by operating and controlling a global positioning system (GPS), a gyro sensor, and a multi-axis sensor. The movement/posture information may be associated with a movement and posture of the electronic device in the storage box 110. That is, the controller 120 may operate and control various built-in sensors and generate dynamic information on the electronic device sensed by the controlled sensors, and may thus generate state information on how the electronic device moves and takes a posture in the storage box 110.

According to an embodiment, the system 100 for receiving and storing an electronic device may be configured to further include the slide structure 112 that is configured to allow an electronic device inserted through an inlet to slide and move to a specific position of the storage box 110.

The slide structure 112 may be installed inside the storage box 110 and configured to allow the electronic device to slide at the slope and autonomously move to a specific position of the storage box 110. That is, the slide structure 112 may allow an electronic device inserted through an inlet located at an upper part of the storage box 110 to gradually fall while sliding at a low slope and to move to a specific position.

The slide structure 112 may be designed as a multi stage and a detached stage according to a position of the inlet in the storage box 110.

The multi stage may be a means that is designed to have a plurality of slides with a step difference when the inlet is located on one side surface of the storage box 110 and that is configured to allow the electronic device to slide while dispersing an impact by falling between each of the slides. The multi stage may be designed to have adjacent slides tilted in opposite directions and may guide the electronic device to reach a specific position while slowly sliding and falling inside the storage box 110.

The detached stage may be a means that is designed to have slides in an inverted V shape when the inlet is located on the upper surface of the storage box 110 and that is configured to slide the electronic device in one direction among the slides of the inverted V The detached stage may be designed to have slides in an inverted V shape having a point at which an electronic device falls from the inlet as an inflection point and may guide the electronic device to reach a specific position while slowly sliding on a surface of the inverted V

According to an embodiment, the system 100 for receiving and storing an electronic device may determine whether the electronic device normally slides on the slide structure or whether the electronic device normally reaches a specific position of the storage box 110 through sliding.

To this end, the system 100 for receiving and storing an electronic device may include a path sensing means and a load sensing means.

The path sensing means may be a means that is mounted on one end of the storage box 110 and that is configured to check a state in which the electronic device slides along a receiving path defined by a structure in which the slide structure 112 is installed. That is, the path sensing means may determine whether the electronic device normally slides and falls on the slide structure 112 along the receiving path and reaches a determined position.

The load sensing means may be a means that is mounted on one end of the storage box 110 and that is configured to check whether the electronic device reaches a specific position (e.g., a bottom surface) of the storage box 110 through a change in load on the storage box 110. That is, the load sensing means may determine that the electronic device is normally received and stored when a load of the storage box 110 changes as the electronic device reaches a specific position.

According to an embodiment, the system 100 for receiving and storing an electronic device may be configured to further include a slot structure 113, which is configured to allow the electronic device inserted through the inlet to move and be received by and stored in a determined slot.

The slot structure 113 may install a plurality of slots inside the storage box 110 and allow the moved electronic device to be received by each of the slots. That is, the slot structure 113 may provide a plurality of slots according to specifications such as the type, brand, price, and the like of the electronic device and may guide the electronic device to be moved to, received by, and stored in a slot provided according to the specifications of the inserted electronic device.

The slot structure 113 may include a slot moving apparatus and a locking apparatus that allow management or protection of an electronic device received by and stored in the slots.

The slot moving apparatus may be a means configured to allow a position change between the plurality of slots. The slot moving apparatus may adjust an arrangement of received and stored electronic devices by moving a specific slot up, down, left, or right in a state in which the plurality of slots is arranged, and may allow a desired electronic device to be quickly searched for and extracted from the storage box 110.

The locking apparatus may be a means configured to lock a slot that receives the electronic device. The locking apparatus may lock the slot in which the electronic device is received and stored, preventing an outsider from opening the slot without permission and allowing only a few authorized persons to open the slot and extract the electronic device.

According to an embodiment of the present disclosure, a system for receiving and storing an electronic device that guides a method of receiving and storing a purchased electronic device in real time, and a method of receiving and storing an electronic device at the time of trading may be provided.

In addition, according to the present disclosure, it may be possible to reduce damage and an adverse effect on a sales plan that may occur when the purchased electronic device and the stored electronic device are different, by checking in real time whether the purchased electronic device is stored accurately according to the plan.

The system 100 for receiving and storing an electronic device may include a storage box for confirming in real time that an inspected electronic device (e.g., a used cellular phone, a mobile phone, and the like) has been normally received and stored.

The structure and function of the storage box of the present disclosure are as follows.

The storage box may include an enclosure (space) for performing receiving and storing functions.

The storage box may perform a function for checking receiving and storing states (a function for checking a purchased electronic device).

The storage box may have a sensor and a laser installed on the receiving path and check the receiving and storing states by checking, using the sensor and the laser, whether the purchased electronic device passes through the receiving path.

The storage box may, when the purchased electronic device moves along the receiving path to reach a specific position and applies a certain load, physically or electrically recognize the load and check the receiving and storing states of the electronic device.

The storage box may have a camera installed on the receiving path and may check receiving of the purchased electronic device by detecting, using the camera, whether the purchased electronic device passes through the receiving path.

The storage box may check the receiving and storing states by recognizing a barcode and a quick response (QR) code of the purchased electronic device.

The storage box may perform a mechanical function for receiving an electronic device (e.g., a mechanical operation to restore an electronic device that is out of an allowed range to a defined receiving path).

The system 100 for receiving and storing an electronic device may determine a value evaluation and a storage method for the purchased electronic device, attach a tag embedding the evaluated value, and allow the electronic device to be received by and stored in a drawer, a specific box, and an automated device, according to the determined storage method.

The system 100 for receiving and storing an electronic device may include a component that outputs a tag.

The system 100 for receiving and storing an electronic device may be provided with the inlet through which the electronic device may be put into the storage box.

The system 100 for receiving and storing an electronic device may check the position of the electronic device through an application operating in the electronic device.

The system 100 for receiving and storing an electronic device may check a current state of the storage box by photographing the storage box using a camera inside the electronic device.

The system 100 for receiving and storing an electronic device may detect the movement of the electronic device and measure the final position and posture of the electronic device using sensors (GPS data, a gyro sensor, and a multi-axis sensor inside the electronic device.

When the electronic device (a mobile phone) is inserted into the storage box, the system 100 for receiving and storing an electronic device may determine a state of a change in a sensor value that occurs while the electronic device moves and may thus check whether the electronic device is inserted into the storage box normally through the receiving path.

That is, since the system 100 for receiving and storing an electronic device has a structure in which the inside of the storage box has a slide structure that is configured to slide and drop the electronic device downward, a pattern in which the electronic device sequentially moves at a slope equal to an angle of the slide structure may be checked.

In addition, the system 100 for receiving and storing an electronic device may calculate a GPS and a sensor value of the final position to check a position coordinate and the height of the electronic device.

The system 100 for receiving and storing an electronic device may insert the electronic device into the storage box using a drop method.

The drop method may be a method of moving the electronic device inserted through the inlet at a gradient determined according to an internal structure and finally putting the electronic device in the storage box.

In the drop method, the electronic device may be dropped downward according to the slide structure of the storage box.

In addition, in the drop method, the electronic device may be moved to a specific location using a mechanical mechanism.

The system 100 for receiving and storing an electronic device may insert the electronic device into the storage box with an individual drawer-type storage method.

The system 100 for receiving and storing an electronic device may receive/store one or more electronic devices by inserting the electronic devices in a specific drawer.

When the electronic device needs to be retrieved, the system 100 for receiving and storing an electronic device may independently perform receiving and retrieving operations for each drawer.

The system 100 for receiving and storing an electronic device may be provided with an operating scenario so that the electronic device may be received by and stored in the storage box.

In the operating scenario, the system 100 for receiving and storing an electronic device may upload, install, and execute an application on the electronic device.

The system 100 for receiving and storing an electronic device may perform wireless interworking with and remote control of the electronic device by the executed application.

The system 100 for receiving and storing an electronic device may obtain information from the electronic device through the wireless interworking and the remote control.

The system 100 for receiving and storing an electronic device may determine the current position of the electronic device through a GPS sensor and the like mounted on the electronic device (securing position information).

The system 100 for receiving and storing an electronic device may obtain information on the electronic device when the electronic device is inserted into the storage box.

The system 100 for receiving and storing an electronic device may recognize and obtain a change value suitable for moving and insertion situations of the electronic device. The system 100 for receiving and storing an electronic device may obtain information on the electronic device from an operation center associated with the storage box and trading of the electronic device. The system 100 for receiving and storing an electronic device may obtain various change values, which occur when the electronic device is actually inserted into the storage box, as information.

The system 100 for receiving and storing an electronic device may confirm that the inserted electronic device is a chargeable mobile phone by recognizing when the electronic device changes into a charging mode through a wireless charging pad attached to a receiving position of the storage box.

The system 100 for receiving and storing an electronic device may set a space of the storage box as a wireless interworking space and, based on a connection procedure or an information value that changes during a connection according to BT (Bluetooth) interworking and NFC interworking of an electronic device, confirm that the electronic device inserted into the interworking space is a mobile phone.

The system 100 for receiving and storing an electronic device may confirm that the inserted electronic device is a mobile phone through a camera that may photograph repeated on/off operations of a built-in flash of the electronic device.

The system 100 for receiving and storing an electronic device may check whether the electronic device is received by the storage box by utilizing a geomagnetic sensor mounted on the electronic device. The system 100 for receiving and storing an electronic device may check a movement of the electronic device in the storage box by checking, through the geomagnetic sensor, a change value and a normal value of a geomagnetic characteristic value regarding the floor of the storage box. Here, a medium forming the bottom of the storage box may be manufactured so that the geomagnetic characteristic value is always constant in an empty state.

The system 100 for receiving and storing an electronic device may include the storage box that may safely receive and store an electronic device that has completed a purchase procedure.

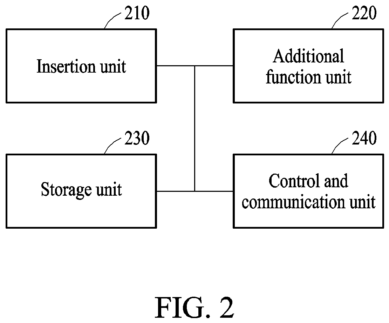

FIG. 2 is a diagram illustrating an example of a configuration of a system for receiving and storing an electronic device according to the present disclosure.

The system 100 for receiving and storing an electronic device according to an embodiment may be configured to include an insertion unit 210, an additional function unit 220, a storage unit 230, and a control and communication unit 240.

The system 100 for receiving and storing an electronic device may purchase and receive an electronic device (e.g., a used cellular phone, a mobile phone, and the like) and store the electronic device until retrieval.

The insertion unit 210 may include a receiving path configured to put the electronic device in the storage box and an additional function (an inlet door, a door locking apparatus, a receiving confirmation function, a receipt state display function, and the like) associated with the receiving path.

The storage unit 230 may include a locking apparatus that may allow the electronic device to be safely stored and retrieved.

The additional function unit 220 may be an apparatus that may allow an operation of various additional functions in storing and retrieving the electronic device.

The control and communication unit 240 may be an apparatus that may allow controlling a storage function and checking state information.

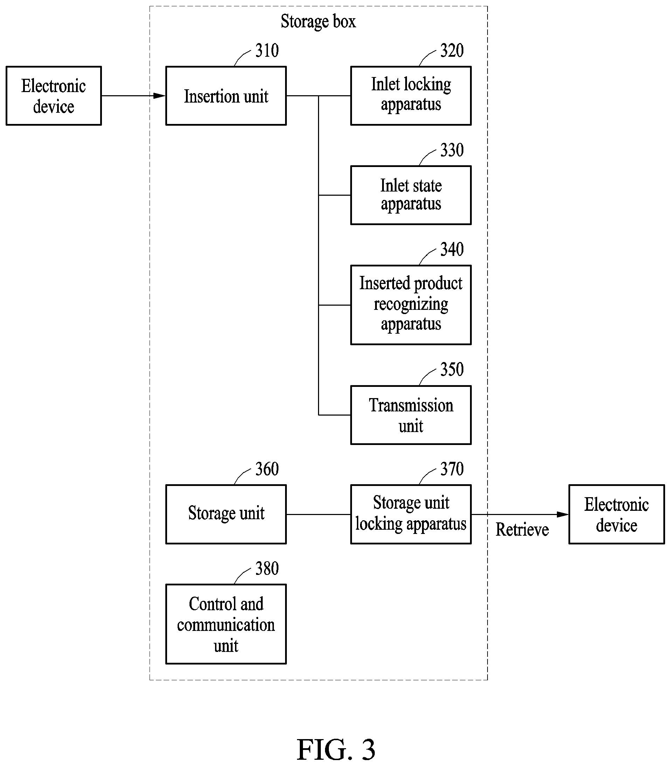

FIG. 3 is a functional block diagram of when an electronic device is received and retrieved after being stored.

FIG. 3 illustrates apparatuses configured to receive and store the electronic device.

An insertion unit 310 may be for inserting the electronic device into a storage box through an inlet.

An inlet locking apparatus 320 may be for locking the inlet door according to a method of the operation and configuration of the inlet.

An inlet state apparatus 330 may be an apparatus that displays whether an inserted electronic device is in a state to confirm that the electronic device is properly inserted.

An inserted product recognizing apparatus 340 may be an apparatus for checking insertion of electronic devices other than an electronic device that is predicted to be inserted.

A transmission unit 350 may be an apparatus that moves the electronic device to a storage unit 360.

The storage unit 360 may be an apparatus that finally stores the electronic device.

A storage unit locking apparatus 370 may be an apparatus for retrieving the electronic device stored in the storage unit 360.

A control and communication unit 380 may be an apparatus for checking a real-time state of the stored electronic device and controlling the storage unit 360.

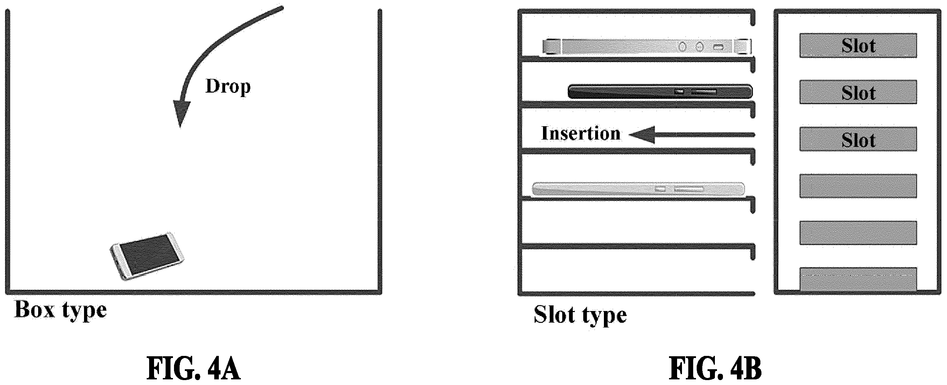

FIG. 4 is a diagram for describing a storage box according to a method of receiving an electronic device of the present disclosure.

FIG. 4 illustrates an example of the shape of the storage box according to the method of receiving the electronic device.

The shape of the storage box for receiving and storing an electronic device may depend on the way the electronic device is received.

In FIG. 4A, a storage box applying a storage method that drops an electronic device is illustrated. Here, the storage box may be a box type (box structure) having some amount of space.

In FIG. 4B, a storage box applying a storage method that pushes an electronic device into a specific space is illustrated. Here, the storage box may have a slot-type (slot structure) shape. The slot type (slot structure) may include a structure in which the slot is tilted at a certain angle, in addition to a vertical or horizontal structure, depending on the storage direction.

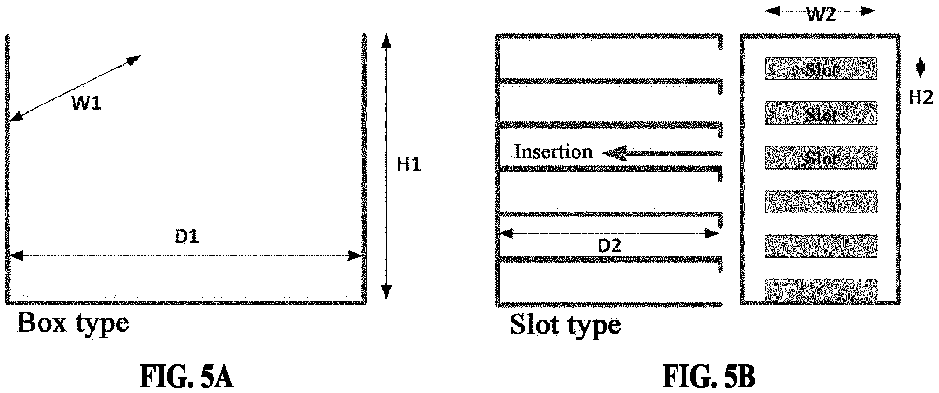

FIG. 5 is a diagram for describing an example of dimensions of a storage box according to the present disclosure.

As shown in FIG. 5, the size of the storage box may be expressed as depth (indicated by D), height (indicated by H), and width (indicated by W).

In the case of the box type (box structure) of FIG. 5A, designing in a size of 180 mm (D) × 170 mm (H) × 100 mm (W) or more is illustrated, considering the case in which the electronic device is not normally seated at a specific position but received tilted toward a wall of the storage box or standing vertically.

In the case of the slot type (slot structure) of FIG. 5B, designing each storage slot in a size of 170 mm (D) × 10 mm (H) × 80 mm (W) or more is illustrated.

In order for the electronic device to be received in the storage box, some conditions must be need to be considered in the storage box according to an insertion direction and height of the electronic device.

The system 100 for receiving and storing an electronic device may have a structure of the storage box and a receiving/storing algorithm, both of which minimize an impact on a stored electronic device in the case of continuous storage, thereby reducing damage to the stored electronic device.

Such structure of the storage box and the receiving/storing algorithm are essential because electronic devices need to be continuously stored in a specific space (storage box).

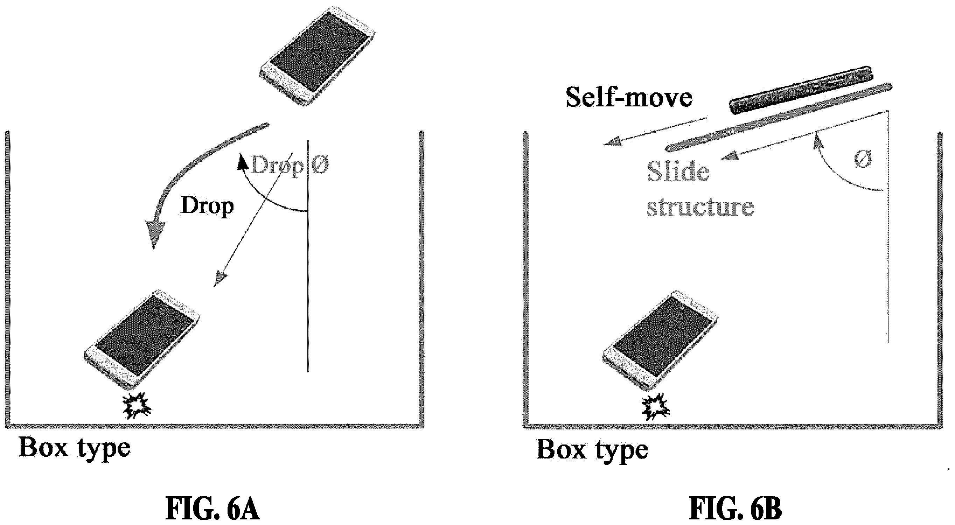

FIG. 6 is a diagram for illustrating a form of impact of when an electronic device is inserted, for each type of storage box.

In FIG. 6A, an electronic device impacting on a specific position of the storage box in the box type (box structure) according to an insertion angle (Drop Φ) is illustrated.

In FIG. 6B, an inserted electronic device impacting on a specific position of the storage box after self-moving on a slide structure tilted at a certain slope in the box type (box structure) is illustrated.

In particular, in the box type (box structure) of FIG. 6A, the insertion angle (Drop Φ) and height of the inlet may be designed so that an electronic device inserted later may not impact on a received and stored electronic device.

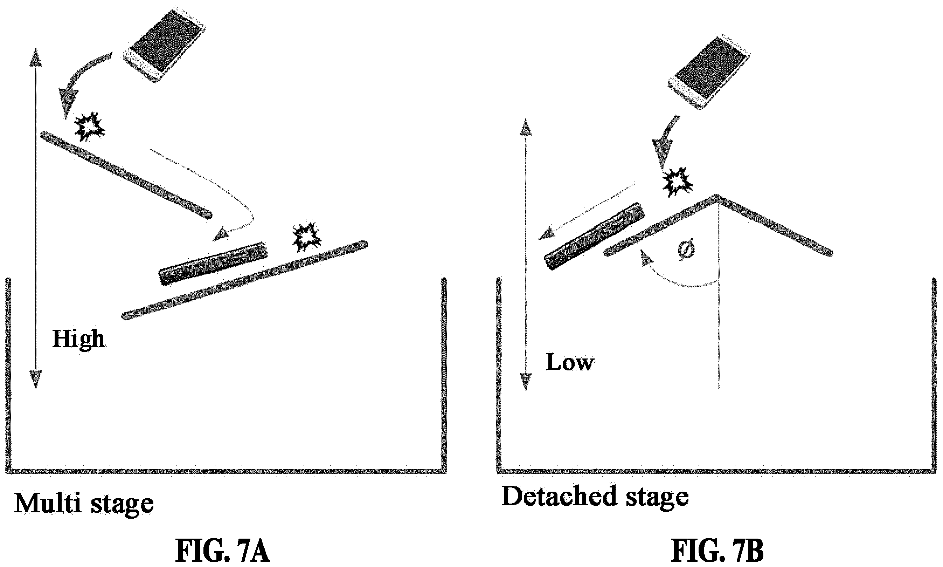

FIG. 7 is a diagram for describing a slide structure of a storage box according to the present disclosure.

The system 100 for receiving and storing an electronic device may be provided with a storage box having a slide structure that may minimize an impact of the electronic device on a specific position and that may also minimize an impact on a stored electronic device.

The slide structure may be designed at an angle between 30 and 75 degrees based on the direction in which the electronic device falls so that the electronic device may slide and the impact may be gradually mitigated.

The slide structure may be designed at 30 degrees or more in the vertical direction to reduce an impact in the storage box and may be maintained at 75 degrees or less to provide a slide function so that the electronic device may self-move.

A separate subsidiary material may be added to a surface of the slide structure to mitigate an impact and prevent a scratch on the electronic device. However, when the sliding function of the electronic device is reduced due to a subsidiary material, the system 100 for receiving and storing an electronic device may be designed by flexibly adjusting the installation angle of the slide structure.

FIG. 7A illustrates a multi stage in which the slide structure is designed in multiple stages so that an electronic device inserted at a high position may slide while mitigating shock and finally reach a specific position in the storage box.

FIG. 7B illustrates a detached stage that may mitigate an impact occurring when the electronic device reaches a specific position by an inverted V-shape slide structure installed at a low position.

The slide structure may have a difference in a structural form depending on the position in which the electronic device is inserted.

When an insertion position is high as shown in FIG. 7A, the slide structure may formed including multiple stages.

On the contrary, when the insertion position is low or the size of the storage box is large, as shown in FIG. 7B, the slide structure may apply a detached-stage structure. An angle between the slide structures may be designed between 30 and 75 degrees.

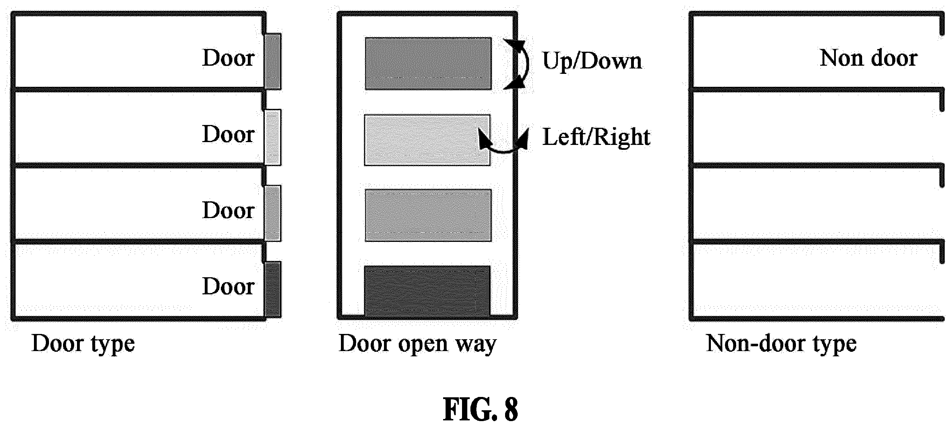

FIG. 8 is an example diagram of a structure of a door/non-door type of a storage box with a slot-type structure.

As shown in FIG. 8, the storage box of the slot-type structure may have a structure in which a door is attached or not attached to each slot.

The slot to which the door is attached may be implemented to move in four directions, up, down, left, and right, according to the opening and closing direction of the door, and a locking apparatus may be mounted as needed.

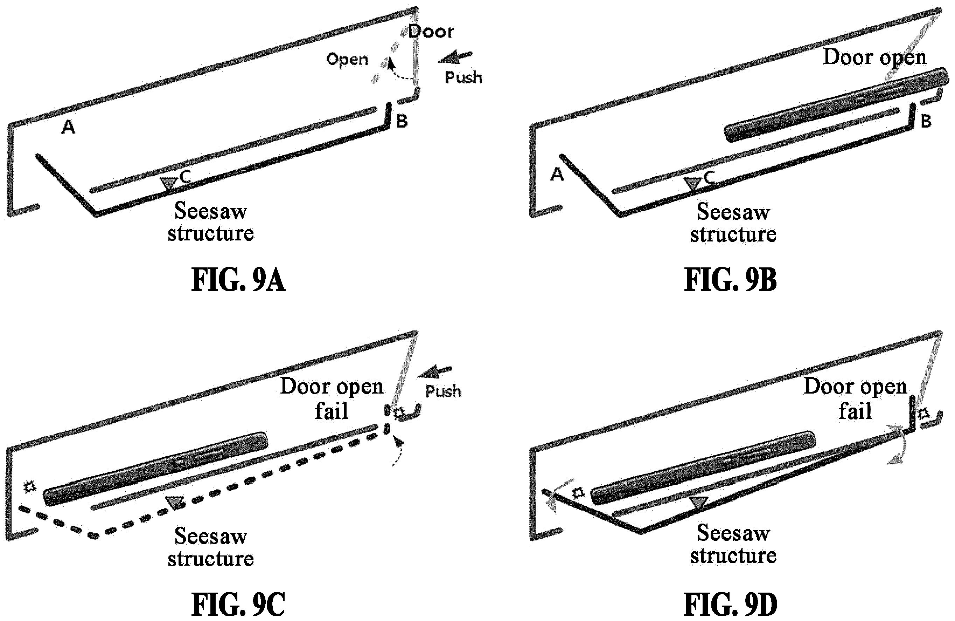

FIG. 9 is a diagram for illustrating a receiving operation and a lock form when inserting an electronic device through a slide of a slot-type receiving structure.

When a storage box has a slot-type structure, a simple door structure that only opens and closes may be used instead of using a door with a locking apparatus.

In the simple door structure, the system 100 for receiving and storing an electronic device may apply a seesaw structure to a slide structure having a certain depth in order to make it difficult to take out a received electronic device, so that an outsider may not take out the electronic device through an insertion door.

The system 100 for receiving and storing an electronic device may add the seesaw structure to an end portion through which an electronic device is inserted, as shown in FIG. 9.

In the seesaw structure, when A part is pushed by an insertion load and a load of the electronic device, B part on the inlet side may rise due to the seesaw structure C at a specific point, so that the door may not open after the electronic device is inserted.
(a) of FIG. 9 is an application embodiment of a locking apparatus using the seesaw structure when the locking apparatus is not provided to an inlet door of the storage box of the slide structure. The door may be a structure that allows the electronic device to be easily pushed and inserted when pushed in (a spring connection structure that may return to an original state when no pushing force is applied).
ⓑ of FIG. 9 is an embodiment illustrating a door opening failure when the locking apparatus using the seesaw structure operates after an electronic device to be stored is inserted through the door.
ⓒ and ⓓ of FIG. 9 are embodiments for each operation step when an actual electronic device is inserted. When the electronic device is inserted into a slot of the slide structure, the A part of the seesaw structure may be pushed downward and the B part may rise upward due to the load of the electronic device. The seesaw structure may provide a structure in which an inserted electronic device may not be taken out by the hand or other instruments from the outside by preventing the inlet door from opening any more due to the structure in which the B part protrudes upward.

In general, the method of receiving and storing may vary depending on the subject and method of purchasing an electronic device. In the case of a storage box with no automated function added, the storage box may be implemented and operated in the following way.

Implementation methods other than an automated storage box include a method without an operator and a method in which an operator is in charge of some operations.

The method without an operator may require communication and interworking between the storage box and a server. In particular, technology to check whether an electronic device has been inserted into the storage box is important.

The method in which an operator is in charge of some operations does not need a semi-automated function since the reliability of the operator may be replaced with an intelligent function of an existing storage box.

That is, if the operator guarantees the task, which is a state check function of the electronic device and an insertion situation of the storage box, it may not be an issue that an automatic recognition function of the storage box is slightly reduced. Thus, in this case, an example may be shown that the operator may receive the electronic device directly from a customer, check a state, and simply insert the electronic device. In addition, in this case, it may be possible to immediately confirm a purchased electronic device by putting the electronic device into a specific storage box.

A method of receiving and storing according to an operating agent is briefly described below.

In a consumer-to-consumer (C2C) analysis: After recording information of an electronic device, the electronic device may be received by and stored in a drawer and a specific box.

In an interworking analysis between a customer and a tool: After purchasing, the electronic device may be attached with a tag including information on the electronic device, and received by and stored in a drawer and a specific box.

In an interworking analysis between a customer and an automated system: After purchasing, the electronic device may be attached with a tag including information on the electronic device, and received by and stored in a drawer and a specific box, or received by and stored inside an automated device.

The system 100 for receiving and storing an electronic device may include a configuration for determining the state of the electronic device stored in the storage box.

The system 100 for receiving and storing an electronic device may determine the state of the electronic device through a tag output. The tag may be an attached printout including information on a purchased electronic device.

The system 100 for receiving and storing an electronic device may determine the state of the electronic device through the inlet. The inlet may be for receiving an electronic device, and the door may be designed differently depending on a design structure.

The system 100 for receiving and storing an electronic device may determine the state of the electronic device through the storage box according to a receiving structure and a storage box structure of the electronic device.

The system 100 for receiving and storing an electronic device may check the state while receiving of the electronic device is in progress.

The system 100 for receiving and storing an electronic device may check a movement and storage position of the electronic device through an application installed in the purchased electronic device. The system 100 for receiving and storing an electronic device may take a picture of the state of the storage box and check the state using a wireless communication function of the electronic device and a camera inside the electronic device through the application. The system 100 for receiving and storing an electronic device may check the state of the electronic device by recognizing a specific shape attached to a specific position of the electronic device.

The system 100 for receiving and storing an electronic device may detect the movement of the electronic device and measure the final position of the electronic device using sensors (GPS data, a gyro sensor, and a multi-axis sensor) inside the electronic device. The system 100 for receiving and storing an electronic device may obtain and check information on detection of the movement and the final position of the electronic device in real time through the application mounted on the electronic device.

When the electronic device (e.g., a mobile phone and the like) is inserted into the storage box, the system 100 for receiving and storing an electronic device may determine a state of a change in a sensor value that occurs while the electronic device moves and may thus check whether the electronic device is normally inserted into the storage box. When the system 100 for receiving and storing an electronic device has a structure in which an inside of the storage box falls down in a sliding method, the system 100 for receiving and storing an electronic device may check a pattern in which the electronic device sequentially moves at a slope value equal to an angle of the slide and calculate GPS and sensor values of the final position to check a position coordinate and a height.

The storage box according to the receiving method of the electronic device may be implemented in a drop method and a slot method.

The drop method may be a method in which, when the electronic device is inserted into a specific inlet, the electronic device moves according to an internal structure and is dropped to a final storage position.

The drop method may be a method in which the electronic device moves by the slide structure to a specific location and drops.

The drop method may be a method of dropping the electronic device at a specific location by an operator or a machine mechanic.

The slot method may be a method of receiving and storing one electronic device in an individual storage slot.

In the slot method, the operator may directly insert the electronic device, and the electronic device may be automatically stored and retrieved according to the structure.

The structure of the slot may be designed to receive the electronic device horizontally or vertically, and may have a certain slope.

The slot method may store the electronic device in a horizontal structure and may have a slide structure.

The slot method may be a method of receiving/storing one or more electronic devices by individually inserting the electronic devices into a specific drawer.

When the storage box has a structure including a partition in one large drawer, a drop and slot method may be employed.

An operation scenario and an application method related to receiving and storing an electronic device through interworking with an application may be exemplified as follows.

In an electronic device, an application may be installed and executed after being uploaded.

The system 100 for receiving and storing an electronic device may perform wireless interworking between the electronic device and the storage box or an operation center and remote control of the electronic device.

The system 100 for receiving and storing an electronic device may obtain information on the electronic device through control of the electronic device.

The system 100 for receiving and storing an electronic device may determine a current position of the electronic device (securing position information).

The electronic device storage system 100 may obtain information related to the electronic device when the electronic device is inserted into the storage box.

The system 100 for receiving and storing an electronic device may recognize and obtain a change value suitable for moving and insertion situations of the electronic device. The system 100 for receiving and storing an electronic device may obtain information on the electronic device from the storage box and an operation center, or obtain various pieces of change value information that occur when the electronic device is actually inserted into the storage box.

The system 100 for receiving and storing an electronic device may attach a wireless charging pad to the bottom of the storage position in which the electronic device is seated after inserted and detect a change into a charging mode to check whether the inserted electronic device is a pre-contracted electronic device.

The system 100 for receiving and storing an electronic device may set a receiving space at the time of inserting the electronic device as a wireless interworking space. The wireless interworking space may be a space that does not interwork outside the storage box and needs to be shielded to prevent interworking with a phone outside. The system 100 for receiving and storing an electronic device may operate BT (Bluetooth) interworking and NFC interworking that may interwork with the electronic device by a wireless interworking space and, based on a connection procedure or a changed information value at the time of connecting, recognize the electronic device.

The electronic device storage system 100 may recognize the electronic device through a camera that may photograph repeated on/off operations of a built-in flash (or a display of the electronic device) of the controlled electronic device.

The system 100 for receiving and storing an electronic device may check a state in which the electronic device moved by checking a change value and a normal value of a geomagnetic characteristic value regarding the floor of the storage box, by utilizing a geomagnetic sensor among sensors for a movement function of the electronic device, as the electronic device is stored in a specific position of the storage box. The system 100 for receiving and storing an electronic device may always set a geomagnetic sensor value according to the medium forming a specific position of a seating area of the storage box to a specific value, and may thus check the state in which the electronic device moved using the value as a base value.

In the system 100 for receiving and storing an electronic device, an inspection unit and a storage unit associated with inspecting the electronic device and inserting the electronic device into the storage box may be designed in various structures according to an operation method.

In the system 100 for receiving and storing an electronic device, when the inspection unit and the storage unit have separate independent structures, the inspection unit and the storage unit may be installed and operated in separate locations and may mechanically interwork.

Two functions may be implemented by being included in one instrument, but when two functions are included in one instrument, installation and operation may be difficult as they have specific sizes, loads, and shapes.

When independently interworking, there may be an advantage of operating independently and having less restriction in installation.

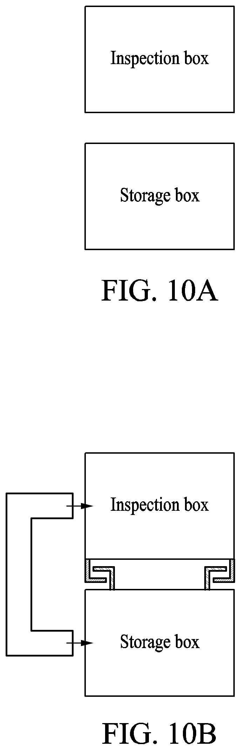

FIG. 10 is a diagram illustrating an example of a structural design of an inspection box and a storage box.

FIG. 10A illustrates a structure in which an inspection function and a storage function are separated.

FIG. 10B illustrates a structure in which the inspection function and the storage function are separated, and exemplifies a structure in which the inspection box and the storage box are installed in a same space and a separate connection structure is added to enable simple interworking.

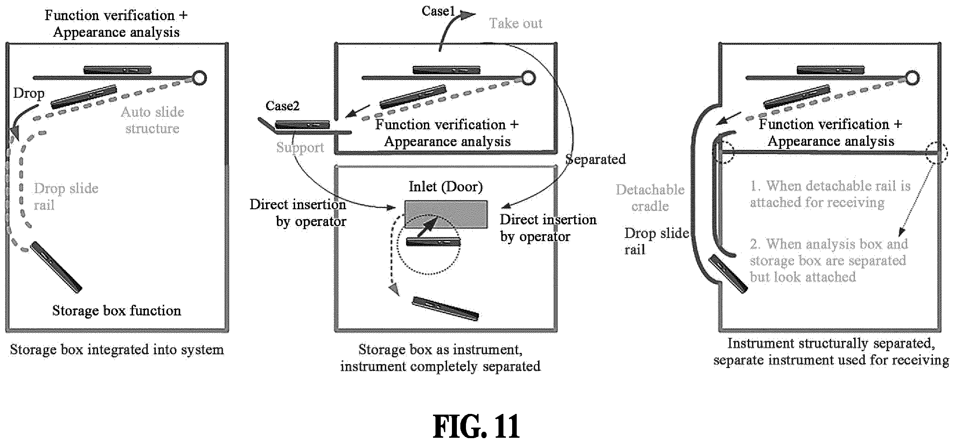

FIG. 11 is a more detailed diagram of the structural design of FIG. 10.

FIG. 11A is an example of a case in which an analysis function and a receiving (storing) function are included in one instrument and interworking.

FIGS. 11B and 11C are embodiments of cases in which the analysis function and the receiving (storing) function are conveniently used by interworking with each other when the analysis function and the receiving (storing) function are configured in a separate structure.

FIG. 11B is an embodiment of a case in which an operator takes out the electronic device when an inspection is completed in the inspection unit and inserts the electronic device into an inlet of the storage box. In this case, the operator may attach an identification code label to the electronic device or check a final state and insert the electronic device.

In the case of FIG. 11C, although the inspection unit and the storage box are separated, it may possible to attach an instrument that connects a specific position of the inspection unit located above the storage box and a specific position of the storage box so that the electronic device may be automatically received to some extent.

The system 100 for receiving and storing an electronic device may include an enclosure (space) for performing automatic receiving and storage box functions.

The system 100 for receiving and storing an electronic device may check automatic receiving and storing states of a purchased electronic device.

The system 100 for receiving and storing an electronic device may be a method for checking a receiving state of the purchased electronic device, and may check a passing state using a sensor and laser in the receiving path.

The system 100 for receiving and storing an electronic device may check the receiving state of the purchased electronic device through a method of recognizing the load, a passing and receiving state check through a camera, a method of recognizing a barcode and a QR code, a mechanical method for receiving, and the like.

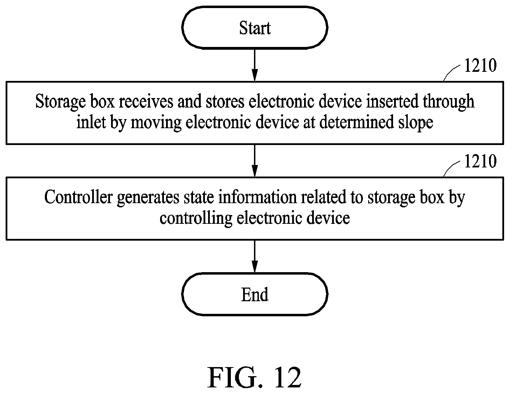

Hereinafter, a workflow of the system 100 for receiving and storing an electronic device according to embodiments of the present disclosure is described in detail with reference to FIG. 12.

FIG. 12 is a flowchart illustrating a method of receiving and storing an electronic device at the time of trading, according to an embodiment of the present disclosure.

The method of receiving and storing an electronic device according to the present embodiment may be performed by the system 100 for receiving and storing an electronic device.

First, in operation 1210, the storage box of the system 100 for receiving and storing an electronic device may receive and store an electronic device inserted through an inlet by moving the electronic device at a determined slope. Operation 1210 may be a process in which, when a purchased electronic device is inserted through the inlet, the electronic device is moved to a specific internal storage space and stably stored.

Here, the electronic device may be an electronic product such as a cellular phone, a mobile phone, and the like purchased for second-hand use from a user, who is a customer.

In operation 1220, a controller of the system 100 for receiving and storing an electronic device may generate state information related to the storage box by controlling the electronic device. Operation 1220 may be a process of generating state information according to a change that occurs in the storage box in relation to an insertion of the electronic device into the storage box.

In generating the state information, the controller may generate position information, internal photographing information, and movement/posture information as the state information.

The controller may generate position information to be included in the state information by operating and controlling a dedicated application installed on the electronic device. The position information may be associated with a current position of the electronic device in the storage box. That is, the controller 120 may operate and control the application and generate information on a position of an inserted electronic device in the storage box 110 through identifying the position by the application, and may thus generate state information on whether the electronic device is received and stored in a defined position.

In addition, the controller may generate internal photographing information to be included in the state information by operating and controlling a camera mounted on the electronic device. The internal photographing information may be associated with an inside of the storage box. That is, the controller may operate and control a built-in camera and generate a state of the inside of the storage box as information through internal photographing by the controlled camera, and may thus generate state information that allows the current situation of the inside of the storage box to receive and store an electronic device to be known.

In addition, the controller may generate movement/posture information to be included in the state information by operating and controlling a global positioning system (GPS), a gyro sensor, and a multi-axis sensor. The movement/posture information may be associated with a movement and posture of the electronic device in the storage box. That is, the controller may operate and control various built-in sensors and generate dynamic information on the electronic device sensed by the controlled sensors, and may thus generate state information on how the electronic device moves and takes a posture in the storage box.

According to an embodiment, the system 100 for receiving and storing an electronic device may be configured to further include a slide structure that is configured to allow an electronic device inserted through an inlet to slide and move to a specific position of the storage box.

The slide structure may be installed inside the storage box and allow the electronic device to slide at the slope and autonomously move to a specific position of the storage box. That is, the slide structure may allow an electronic device inserted through an inlet located at an upper part of the storage box to gradually fall while sliding at a low slope and to move to a specific position.

The slide structure may be designed as a multi stage and a detached stage according to a position of the inlet in the storage box.

The multi stage may be a means that is designed to have a plurality of slides with a step difference when the inlet is located on one side surface of the storage box and that is configured to allow the electronic device to slide while dispersing an impact by falling between each of the slides. The multi stage may be designed to have adjacent slides tilted in opposite directions and may guide the electronic device to reach a specific position while slowly sliding and falling inside the storage box.

The detached stage may be a means that is designed to have slides in an inverted V shape when the inlet is located on the upper surface of the storage box and that is configured to slide the electronic device in one direction among the slides of the inverted V The detached stage may be designed to have slides in an inverted V shape having a point at which an electronic device falls from the inlet as an inflection point and may guide the electronic device to reach a specific position while slowly sliding on a surface of the inverted V

According to an embodiment, the system for receiving and storing an electronic device may determine whether the electronic device normally slides on the slide structure or whether the electronic device normally reaches a specific position of the storage box through sliding.

To this end, the system 100 for receiving and storing an electronic device may include a path sensing means and a load sensing means.

The path sensing means may be a means that is mounted on one end of the storage box and that is configured to check a state in which the electronic device slides along a receiving path defined by a structure in which the slide structure is installed. That is, the path sensing means may determine whether the electronic device normally slides and falls on the slide structure along the receiving path and reaches a determined position.

The load sensing means may be a means that is mounted on one end of the storage box and that is configured to check whether the electronic device reaches a specific position (e.g., a bottom surface) of the storage box through a change in load on the storage box. That is, the load sensing means may determine that the electronic device is normally received and stored when a load of the storage box changes as the electronic device reaches a specific position.

According to an embodiment, the system 100 for receiving and storing an electronic device may be configured to further include a slot structure, which is configured to allow the electronic device inserted through the inlet to move and be received by and stored in a determined slot.

The slot structure may install a plurality of slots inside the storage box and allow the moved electronic device to be received by each of the slots. That is, the slot structure may provide a plurality of slots according to specifications such as the type, brand, price, and the like of the electronic device and may guide the electronic device to be moved to, received by, and stored in a slot provided according to the specifications of the inserted electronic device.

The slot structure may include a slot moving apparatus and a locking apparatus that allow management or protection of an electronic device received by and stored in the slots.

The slot moving apparatus may be a means configured to allow a position change between the plurality of slots. The slot moving apparatus may adjust an arrangement of received and stored electronic devices by moving a specific slot up, down, left, or right in a state in which the plurality of slots is arranged, and may allow a desired electronic device to be quickly searched for and extracted from the storage box.

The locking apparatus may be a means configured to lock a slot that receives the electronic device. The locking apparatus may lock the slot in which the electronic device is received and stored, preventing an outsider from opening the slot without permission and allowing only a few authorized persons to open the slot and extract the electronic device.

According to an embodiment of the present disclosure, a system for receiving and storing an electronic device that guides a method of receiving and storing a purchased electronic device in real time, and a method of receiving and storing an electronic device at the time of trading may be provided.

In addition, according to the present disclosure, it may be possible to reduce damage and an adverse effect on a sales plan that may occur when the purchased electronic device and the stored electronic device are different, by checking in real time whether the purchased electronic device is stored accurately according to the plan.

The methods according to the embodiments may be recorded in non-transitory computer-readable media including program instructions to implement various operations of the embodiments. The media may also include the program instructions, data files, data structures, and the like alone or in combination. The program instructions recorded on the media may be those specially designed and constructed for the purposes of embodiments, or they may be of the kind well-known and available to one of ordinary skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random-access memory (RAM), flash memory, and the like. Examples of program instructions include both machine code, such as those produced by a compiler, and files containing high-level code that may be executed by the computer using an interpreter. The above-described devices may be configured to act as one or more software modules in order to perform the operations of the examples, or vice versa.

The software may include a computer program, a piece of code, an instruction, or one or more combinations thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored by one or more non-transitory computer-readable recording mediums.

While the embodiments are described with reference to a limited number of drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other examples, and equivalents to the claims are also within the scope of the following claims.

## Claims

1. A system for receiving and storing an electronic device, the system comprising:
a storage box configured to receive and store an electronic device inserted through an inlet by moving the electronic device at a determined slope .

2. The system of claim 1, further comprising a controller configured to generate state information related to the storage box by controlling the electronic device,
wherein the controller is configured to:
generate position information to be included in the state information, by operating and controlling a dedicated application installed on the electronic device, the position information being associated with a current position of the electronic device in the storage box;
generate internal photographing information to be included in the state information, by operating and controlling a camera mounted on the electronic device, the internal photographing information being associated with an inside of the storage box; and
generate movement/posture information to be included in the state information, by operating and controlling a global positioning system (GPS), a gyro sensor, and a multi-axis sensor, the movement/posture information being associated with a movement and posture of the electronic device in the storage box.

3. The system of claim 1, further comprising:
a slide structure installed inside the storage box and configured to allow the electronic device to slide at the slope and autonomously move to a specific position of the storage box.

4. The system of claim 3, wherein the slide structure comprises:
according to a position of the inlet in the storage box,
a multi stage designed to have a plurality of slides with a step difference and configured to allow the electronic device to slide while dispersing an impact by falling between each of the slides; and
a detached stage designed to have slides in an inverted V shape and configured to slide the electronic device in one direction among the slides of the inverted V

5. The system of claim 3, comprising:
a path sensing means that is mounted on one end of the storage box and configured to check a state in which the electronic device slides along a receiving path defined by a structure in which the slide structure is installed; and
a load sensing means that is mounted on one end of the storage box and configured to check whether the electronic device reaches the specific position of the storage box through a change in load on the storage box.

6. The system of claim 1, further comprising:
a slot structure configured to install a plurality of slots inside the storage box and allow the moved electronic device to be received by each of the slots.

7. The system of claim 6, wherein the slot structure comprises:
a slot moving apparatus configured to allow a position change between the plurality of slots; and
a locking apparatus configured to lock a slot that receives the electronic device.

8. A method of receiving and storing an electronic device at a time of trading, the method being implemented in a system for receiving and storing an electronic device and comprising:
receiving and storing, by a storage box of the system for receiving and storing an electronic device, an electronic device inserted through an inlet by moving the electronic device at a determined slope.

9. The method of claim 8, further comprising generating, by a controller of the system for receiving and storing an electronic device, state information related to the storage box by controlling the electronic device, wherein the generating of the state information comprises:
generating position information to be included in the state information, by operating and controlling a dedicated application installed on the electronic device, the position information being associated with a current position of the electronic device in the storage box;
generating internal photographing information to be included in the state information, by operating and controlling a camera mounted on the electronic device, the internal photographing information being associated with an inside of the storage box; and
generating movement/posture information to be included in the state information, by operating and controlling a global positioning system (GPS), a gyro sensor, and a multi-axis sensor, the movement/posture information being associated with a movement and posture of the electronic device in the storage box.

10. The method of claim 8, further comprising:
allowing, by a slide structure installed inside the storage box, the electronic device to slide at the slope and autonomously move to a specific position of the storage box.

11. The method of claim 10, further comprising:
allowing the electronic device, by a multi stage included inside the slide structure and designed to have a plurality of slides with a step difference according to a position of the inlet in the storage box, to slide while dispersing an impact by falling between each of the slides; and
sliding the electronic device, by a detached stage included inside the slide structure and designed to have slides in an inverted V shape according to a position of the inlet in the storage box, in one direction among the slides of the inverted V

12. The method of claim 10, further comprising:
checking, by a path sensing means mounted on one end of the storage box, a state in which the electronic device slides along a receiving path defined by a structure in which the slide structure is installed; and
checking, by a load sensing means mounted on one end of the storage box, whether the electronic device reaches the specific position of the storage box through a change in load on the storage box.

13. The method of claim 8, further comprising:
allowing, by a slot structure configured to install a plurality of slots inside the storage box, the moved electronic device to be received by each of the slots.

14. The method of claim 13, further comprising:
allowing, by a slot moving apparatus, a position change between the plurality of slots; and
locking, by a locking apparatus, a slot that receives the electronic device.

15. A non-transitory computer-readable storage medium storing instructions that, when executed by a processor, cause the processor to perform the method of claim 8.
